# DEMANDE DE BREVET EUROPEEN

(11) **EP 0 923 261 A1**
(43) Date de publication de la demande: **16.06.1999**
(21) Numéro de dépôt: 98403115.3
(22) Date de dépôt: 10.12.1998
(51) Int. Cl.: H04Q 7/32

(54) **Boîte à lettre pour terminal de télécommunications et module d'identité d'abonné**

(30) Priorité: 11.12.1997 FR 9715695
(71) Demandeur: ALCATEL, 75008 Paris (FR)
(72) Inventeur: Hubbe, Pascal, 75014 Paris (FR); Choquet, Christophe, 75015 Paris (FR); Lelong-Gilbert, Anne-Gaelle, 78220 Viroflay (FR)
(74) Mandataire: Smith, Bradford Lee

(57) **Abrégé**

L'invention concerne un procédé de communication entre un terminal de télécommunications présentant des moyens de réception d'un module d'identité d'abonné et des moyens de lecture ou d'écriture dans ledit module, et un module d'identité d'abonné reçu dans lesdits moyens de réception, caractérisé par les étapes:
- d'allocation d'une boîte aux lettres dans le module d'identité de l'abonné;
- de vérification, de préférence à intervalles réguliers, par le terminal de la mise à jour de la boîte par le module.

On assure ainsi simplement, par de simples commandes de lecture et d'écriture par le terminal dans la boîte à lettre, et par une mise à jour de la boîte aux lettres, une communication entre le terminal et le module.

Application à la communication entre un équipement mobile GSM et une carte SIM.

## Description

La présente invention a pour objet un procédé d'échange entre un terminal ou équipement mobile et un module d'identité d'abonné; elle concerne aussi un équipement mobile, et un module d'identité d'abonné.

Les terminaux de télécommunications - et notamment les terminaux mobiles - comprennent actuellement des moyens d'identifications des abonnés; dans le cas de la norme GSM, les stations mobiles sont formés d'un équipement mobile ou mobile dans la suite, qui reçoit des moyens d'identification sous la forme d'une carte SIM (acronyme de l'anglais "Suscriber Identity Module", module d'identité de l'abonné), d'un format normalisé; ces cartes comprennent différents éléments d'identifications de l'abonné, et notamment son numéro d'appel sur le réseau. Dans la suite de la présente description, on considérera l'exemple du GSM et des cartes SIM, étant entendu que la présente invention n'est pas limitée à de tels types de terminaux ou d'équipement mobiles, ou de cartes, mais s'applique aussi bien à d'autres types de réseaux de télécommunications ou de cartes d'identification, ou plus généralement à d'autres moyens d'identification.

L'interface entre un mobile et une carte SIM fait l'objet d'une recommandation (GSM 11.11) de l'E.T.S.I. dans la mesure où les mobiles et les cartes sont généralement fournies par des industriels différents. De ce point de vue, l'existence d'une normalisation permet le développement des produits; elle va néanmoins à l'encontre d'une personnalisation des services ou des mobiles proposés. Cette recommandation sur les cartes SIM comprend un certain nombre de fonctions, telles que les fonctions SELECT de choix par le mobile d'un emplacement mémoire dans la carte SIM, READ de lecture de cet emplacement par le mobile, et UPDATE d'écriture par le mobile dans la mémoire de la carte à l'emplacement préalablement sélectionné.

Les cartes SIM du type Phase 2+ présentent en outre des fonctions additionnelles, qui permettent d'assurer des fonctionnalités plus avancées, et qui sont associées à une ensemble de fonctions additionnelles appelés SIM Application Toolkit. On peut notamment citer les fonctions ENV SMS-PP, qui permet une mise à jour depuis le réseau d'informations dans la carte SIM, de façon transparente pour le mobile portant la carte, et REFRESH, pour indiquer au mobile que des informations ont été mises à jour dans la carte. Ces fonctions supplémentaires de la carte SIM permettent notamment la mise en oeuvre de transactions à distances entre le réseau et la carte, dans des applications bancaires.

EP-A-0 748 135 décrit un système de télécommunications, dans lequel des messages de type SMS contenant les commandes sous le format ECS (Embedded Command Stream) peuvent être envoyés depuis une station hôte vers des mobiles, et dans lequel les cartes SIM réagissent à la réception de tels messages. Les exemples fournis sont la mise à jour à distance depuis le réseau de numéros de téléphones préenregistrés dans la carte SIM, ou encore le télédéchargement depuis le réseau de programmes destinés à être exécutés dans la carte SIM. Les fonctions décrites dans ce document correspondent à celles qui sont mises en oeuvre dans les cartes SIM du type Phase 2+.

EP-A-0 555 992 décrit un adaptateur de données pour un radiotéléphone; l'adaptateur présente un connecteur présentant la forme d'une carte SIM et destiné à être introduit dans le récepteur SIM du radiotéléphone; l'adaptateur présente aussi un logement susceptible de recevoir une carte SIM, et des moyens pour permettre le traitement de données. L'adaptateur de ce document permet de fournir des fonctionnalités de transmission de données à l'utilisateur d'un radiotéléphone, en utilisant le récepteur SIM présent sur le radiotéléphone et en codant les données sous formes de SMS. Il n'est pas fait mention dans ce document de mise à jour ou de modifications de la carte SIM.

WO-A-96014759 décrit un format de TMSI (acronyme de l'anglais Temporary Mobile Subscriber Identity, identité temporaire de l'abonné mobile) permettant l'utilisation d'une même carte SIM et d'un même TMSI sur différents réseaux de télécommunications. Il est proposé dans ce document d'utiliser les bits 5 à 8 du sixième octet du TMSI, qui sont indifférents dans la norme GSM, pour stocker le type de réseau auquel l'abonné a été relié en dernier. Le TMSI est remis à jour à chaque nouvelle communication de l'abonné, par le réseau. Cette mise ajour s'effectue par des commandes spécifiques.

WO-A-9528062 décrit un système de prépaiement mis en oeuvre sur une carte SIM d'un système GSM. Dans ce système, la carte SIM comprend un compteur de prépaiement, qui est débité lors des appels en fonctions de la durée des appels et du tarif. La mise en oeuvre de ce système n'est pas décrite dans le détail des commandes échangées entre le mobile et la carte SIM.

L'invention concerne le problème nouveau d'implémentation de nouvelles fonctions dans les équipements mobiles de télécommunications, qui ne nécessite pas de modifications de l'interface entre les équipements mobiles et le module d'identité, tel que la carte SIM.

Elle propose une solution à ce problème nouveau, qui n'implique pas de modifications des interfaces, et qui permettent des évolutions. La solution de l'invention est simple à mettre en oeuvre, et peut s'adapter à tous les besoins présents et futurs. Elle permet sans modifications de l'interface entre le mobile et le module d'identité, de mettre en oeuvre des applications propriétaires. Ainsi, l'invention permet sans commandes spécifiques dans l'interface entre le mobile et le module d'identité, de procéder à des prépaiements. Elle permet aussi une authentification du mobile par le module d'identité, ou encore une authentification de l'abonné par le mobile.

Plus précisément, l'invention propose un terminal de télécommunication présentant des moyens de réception d'un module d'identité d'abonné et des moyens de lecture ou d'écriture dans ledit module, caractérisé par
- des moyens d'identification d'une boîte aux lettres dans le module d'identité d'abonné;
- des moyens pour déclencher la lecture répétée de la boîte aux lettres.

Dans un mode de réalisation, les moyens d'identification comprennent des moyens de reconnaissance d'un identifiant de boîte aux lettres à la lecture de l'arborescence dudit module lors de l'initialisation du terminal.

De préférence, les moyens pour déclencher la lecture de la boite aux lettres déclenchent la lecture de la boîte aux lettres à intervalles réguliers.

Dans un mode de réalisation, les moyens d'identification identifient une boîte aux lettres unique, et le terminal comprend des moyens pour déterminer à partir du contenu de la boîte aux lettres l'origine de ce contenu.

Dans un autre mode de réalisation, les moyens d'identification identifient une boîte aux lettres dédiée à la communication du terminal vers le module et une boîte à lettres dédiée à la communication du module vers le terminal.

De préférence, le terminal comprend des moyens pour garder en mémoire le contenu lu ou écrit dans la boîte aux lettres et des moyens de comparaison du contenu lu dans la boîte avec le contenu des moyens de stockage.

L'invention concerne aussi un module d'identité d'abonné pour un terminal de télécommunications, caractérisé par des moyens d'allocation d'une boîte aux lettres.

De préférence, les moyens d'allocation affectent un identifiant de boîte aux lettres dans l'arborescence du module.

Avantageusement, la boîte aux lettres comprend un fichier unique.

Dans un autre mode de réalisation, la boîte aux lettres comprend un fichier dédié à la communication du terminal vers le module et un fichier dédié à la communication du module vers le terminal.

L'invention concerne enfin un procédé de communication entre un terminal de télécommunications présentant des moyens de réception d'un module d'identité d'abonné et des moyens de lecture ou d'écriture dans ledit module, et un module d'identité d'abonné reçu dans lesdits moyens de réception, caractérisé par les étapes:
- d'allocation d'une boîte aux lettres dans le module d'identité de l'abonné;
- de vérification par le terminal de la mise à jour de la boîte par le module.

De préférence, l'étape d'allocation comprend les étapes:
- d'allocation par le module d'un identifiant de boîte aux lettres à un ou plusieurs fichiers, et
- de reconnaissance dudit identifiant par le terminal à la lecture de l'arborescence dudit module lors de l'initialisation du terminal.

Dans un mode de réalisation, on prévoit la répétition, de préférence à intervalles réguliers, de l'étape de vérification

Dans un autre mode de réalisation, l'étape de vérification comprend la lecture par le terminal de la boîte à lettres.

La communication du terminal vers le module peut comprendre l'écriture par le terminal dans la boîte aux lettres, et la lecture de la boîte aux lettres par le module.

La communication du module vers le terminal module peut comprendre l'écriture par le module dans la boîte aux lettres, et la lecture de la boîte aux lettres par le terminal.

Dans un mode de réalisation, la boîte aux lettres comprend un fichier servant pour la communication du terminal vers le module et pour la communication du module vers le terminal.

Dans un autre mode de réalisation, la boîte aux lettres comprend un fichier dédié à la communication du terminal vers le module et un fichier dédié à la communication du module vers le terminal.

D'autres caractéristiques et avantages de l'invention apparaîtront à la lecture de la description qui suit de modes de réalisation de l'invention, donnée à titre d'exemple et en référence aux dessins annexés qui montrent:
- figure 1 une représentation des échanges entre le terminal et le module d'identité selon un premier mode de réalisation de l'invention, à l'initiative du mobile;
- figure 2 une représentation des échanges entre le terminal et le module d'identité selon un premier mode de réalisation de l'invention, à l'initiative du module;
- figure 3 une représentation des échanges entre le terminal et le module d'identité selon un second mode de réalisation de l'invention, à l'initiative du mobile;
- figure 4 une représentation des échanges entre le terminal et le module d'identité selon un second mode de réalisation de l'invention, à l'initiative du module.

L'invention propose d'utiliser une "boîte à lettres" pour les échanges entre le mobile et le module d'identité de l'abonné. Cette boîte à lettres, dont la structure est décrite en détail dans la suite, est mise à jour et consultée à l'aides des commandes existantes de l'interface entre le mobile et le module d'identité; l'invention est donc susceptible d'être mise en oeuvre facilement, sans modifications du matériel utilisé. Elle est utilisable pour tout type de message, et fonctionne indépendamment de l'application envisagée.

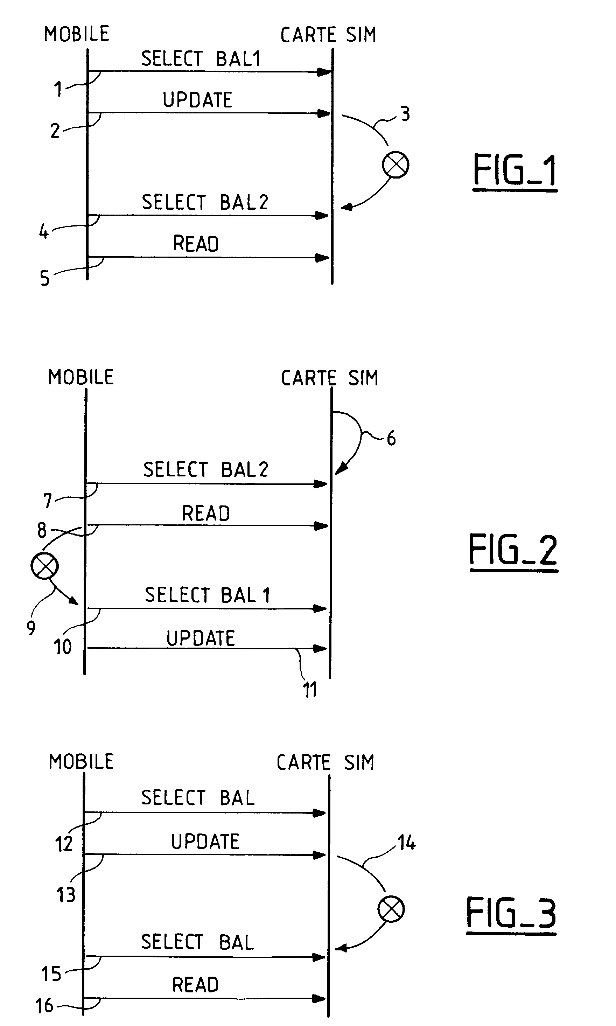

La figure 1 montre les échanges entre le terminal et le module d'identité selon un premier mode de réalisation de l'invention. Dans le mode de réalisation de la figure 1, la "boîte à lettres" est constituée de deux fichiers contenus dans la carte SIM, servant respectivement pour le transfert du mobile vers le module d'identité, et pour le transfert depuis le module vers le mobile; ces fichiers sont notés dans la suite "premier fichier" ou BAL1 et "deuxième fichier" ou BAL2. On a représenté sur la figure 1 à gauche le mobile et à droite le module d'identité.

Pour une transaction à l'initiative du mobile, le mobile émet vers la carte SIM une commande de sélection du premier fichier; cette commande SELECT BAL1 est indiquée par la flèche 1 sur la figure 1. Une fois le premier fichier sélectionné, le mobile écrit dans le fichier, par une commande UPDATE, comme indiqué par la flèche 2 de la figure 1. On écrit ainsi dans le premier fichier un message d'une nature quelconque, dans le module d'identité de l'abonné.

La carte SIM perçoit la mise à jour du premier fichier, et sait qu'un message a été écrit dans la boîte aux lettres par le mobile. Elle peut par exemple pour cela effectuer une scrutation répétée de la boîte aux lettres, par exemple à intervalles réguliers. Elle peut lire le message et exécuter le traitement requis, en fonction du contenu du message. Des exemples de messages et de traitement sont évoqués dans la suite de la description. Si une réponse est requise, la carte SIM l'écrit dans le deuxième fichier BAL2. Ce traitement est symbolisé sur la figure 1 par la flèche 3

Le mobile effectue un polling (ou scrutation) du deuxième fichier, à intervalles réguliers, ou lorsqu'il attend une réponse de la part de la carte SIM. La commande de scrutation correspondante est indiquée sur la figure par les flèches 4 et 5, SELECT BAL2 et READ, qui permettent au mobile de lire le contenu du deuxième fichier. Le protocole de la figure 1 permet ainsi une communication entre le mobile et la carte SIM.

Le protocole décrit en référence à la figure 1 permet l'échange d'un message à l'initiative du mobile; dans une configuration analogue à celle de la figure 1, la figure 2 montre un échange à l'initiative du module d'identité. Sur la figure 2, la carte SIM commence par mettre à jour le deuxième fichier, comme indiqué par la flèche 6. Le mobile scrute le deuxième fichier et lit son contenu, par les commandes SELECT BAL2 et READ, comme indiqué par les flèches 7 et 8. En fonction du contenu du deuxième fichier, le mobile effectue une ou plusieurs actions, symbolisées par la flèche 9, et le cas échéant renvoie un message à la carte SIM en sélectionnant le premier fichier, par une commande SELECT BAL1, flèche 10, et par une commande de mise à jour du premier fichier, UPDATE, flèche 11.

Le mode de réalisation des figures 1 et 2 permet ainsi un échange de données de nature quelconque, entre le mobile et la carte SIM, à l'initiative de l'un ou de l'autre.

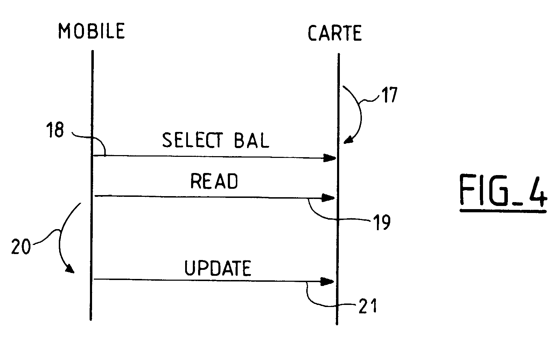

La figure 3 montre une représentation des échanges entre le terminal et le module d'identité selon un second mode de réalisation de l'invention; dans le mode de réalisation des figures 3 et 4, la boîte à lettres est formée d'un fichier unique, contenu dans la carte SIM. La figure 3 montre, comme la figure 1, un échange initié par le mobile. Le mobile émet vers la carte SIM une commande de sélection du fichier de boîte à lettres, commande SELECT BAL référencée 12 sur la figure 3. Une fois le fichier sélectionné, le mobile écrit dans le fichier, par une commande UPDATE, comme indiqué par la flèche 13. De nouveau, le contenu du fichier est quelconque.

La carte SIM perçoit la mise à jour du fichier, et sait qu'un message a été écrit dans la boîte aux lettres par le mobile. Elle peut lire le message et exécuter le traitement requis, en fonction du contenu du message, comme symbolisé par la flèche 14. Des exemples de messages et de traitement sont évoqués dans la suite de la description. Si une réponse est requise, la carte SIM l'écrit dans la boîte aux lettres, en écrasant le message inscrit par le terminal.

Le mobile effectue un polling (ou scrutation) du fichier, à intervalles réguliers. ou lorsqu'il attend une réponse de la part de la carte SIM. La commande de scrutation correspondante est indiquée sur la figure par les flèches 15 et 16, SELECT BAL et READ, qui permettent au mobile de lire le contenu du fichier servant de boîte aux lettres.

On peut prévoir différentes solutions pour permettre au mobile de détecter que la boîte aux lettres a été mise à jour par la carte SIM. Une solution possible est d'utiliser un bit du message inscrit dans une boîte aux lettres comme drapeau ou flag indicateur de la dernière mise à jour: quand le bit est à 0, la dernière mise à jour a été effectuée par le mobile, et quant le bit est à 1, la dernière mise à jour a été effectuée par la carte SIM. Dans ce cas, le mobile écrit des messages avec un bit correspondant à 0, tandis que la carte SIM écrit toujours des messages avec un 1. On peut aussi procéder côté mobile à des scrutations à intervalles réguliers, et garder en mémoire le contenu de la lecture précédente. On pourrait aussi imaginer que l'indication de la mise à jour de la boîte aux lettres s'effectue par mise à jour d'un autre fichier. Une autre solution encore est que le mobile écrive toujours un message dans le ou les fichiers de la boîte aux lettres à chaque fois qu'il reçoit un message en provenance de la carte SIM. Si le mobile conserve en mémoire le dernier message qu'il a écrit, il peut à tout instant comparer le contenu de la boîte aux lettres avec le contenu de la mémoire correspondante pour vérifier si la boîte aux lettres a été mise à jour par la carte SIM.

La figure 4 montre une représentation des échanges entre le terminal et le module d'identité dans le même mode de réalisation, mais à l'initiative du module d'identité de l'abonné. La carte SIM met à jour le fichier de boîte à lettre, comme indiqué par la flèche 17. Lors de la lecture suivante - SELECT BAL suivi d'un READ, flèches 18 et 19, le mobile détecte la mise à jour de la boîte aux lettres, par une des techniques mentionnées plus haut. Il exécute l'action attendue, comme symbolisé par la flèche 20, et le cas échéant envoie un message à la carte SIM par l'intermédiaire de la boîte aux lettres, par écriture dans la boîte aux lettres, commande UPDATE, flèche 21, précédée le cas échéant d'un SELECT.

Dans un cas comme dans l'autre, on peut avec une seule boîte aux lettres échanger des messages entre le mobile et la carte SIM; en utilisant simplement des commandes de base de l'interface mobile/carte, et plus précisément les commandes READ, SELECT et UPDATE.

Le ou les fichiers de la boîte aux lettres sont avantageusement définis dans l'arborescence de la carte SIM, et identifié(s) comme fichiers de boîte à lettres; on peut prévoir comme dans le cas de la figure 1, un fichier unique, ou encore comme dans le cas de la figure 2 deux fichiers servant pour les deux sens de communication. Lors du balayage de l'arborescence de l'arborescence à l'initialisation, le ou les fichiers sont reconnus par le mobile comme des fichiers de boîte aux lettres, par exemple par un identifiant spécifique. L'emplacements du ou des fichiers de la boîte aux lettres sont notés par le mobile. Cette solution est la plus simple dans la mesure où elle utilise les fonctionnalités existantes du mobile et de la carte SIM. On peut toutefois mettre en oeuvre l'invention avec des fichiers ayant une adresse fixe, ou encore en notant l'adresse du ou des fichiers à un endroit prédéterminé de la carte SIM. Ces solutions permettent toutes que le mobile comme la carte SIM connaissent l'adresse du ou des fichiers servant pour la boîte aux lettres.

Les applications de l'invention sont multiples. On décrit maintenant trois applications particulières de l'invention, à titre d'exemple. L'invention peut d'abord être utilisée pour l'authentification du terminal; elle peut encore être utilisée pour l'authentification du module d'identité de l'abonné; enfin, elle peut être utilisée pour une application de prépaiement.

L'invention peut servir à l'authentification de la carte SIM. Ceci peut être utile par exemple pour vérifier l'habilitation de la carte à fonctionner dans des mobiles données, ou à exécuter des fonctions données. En utilisant la boîte à lettres de l'invention, le mobile envoie à la carte un challenge ou défi, accompagné le cas échéant d'indications du type de cryptage, de la clé à utiliser; ces indications peuvent par exemple être codées sur un octet. A la réception du challenge, la carte SIM exécute le chiffrement convenu, et stocke le résultat dans la boîte aux lettres. Ainsi, le mobile peut vérifier que la carte fournit un résultat conforme au résultat attendu. L'invention permet ainsi un authentification supplémentaire de la carte, sans pour autant prévoir sur l'interface de commandes spécifiques du type RUN GSM ALGORITHM et GET RESPONSE.

L'invention permet aussi une authentification du mobile par la carte SIM: cette authentification peut s'effectuer suivant le même procédé, étant entendu que le challenge est d'abord écrit dans la boîte aux lettres par la carte SIM. Une telle authentification du mobile peut être utile pour identifier des types de mobiles ou de terminaux spécifiques - par exemple ceux permettant de mettre en oeuvre un prépaiement ou un paiement à distance.

Dans ces deux exemples d'application de l'invention. on peut prévoir que le ou les fichiers de la boîte aux lettres présentent une taille fixe: les certificats utilisés actuellement présentent une longueur inférieure ou égale à 16 octets; une taille fixe de boîte aux lettres de 20 ou 30 octets convient bien et suffit pour des applications d'authentification.

L'invention peut aussi être utilisée pour la mise en oeuvre de prépaiement, suivant le principe décrit dans la demande WO-A-9528062; dans ce cas, il est possible de stocker dans la boîte aux lettres le montant prépayé et de le modifier à mesure de la consommation. Ceci permet, sans utilisation de commandes spécifiques et dédiées, que le mobile et la carte SIM connaissent à tout instant le montant prépayé disponible. Le stockage de ce montant dans la carte SIM assure les fonctions de sécurité et d'authenticité propres à la carte SIM, et permet aussi un changement de mobile.

D'autres utilisations de l'invention sont possibles; on peut procéder à des échanges de données de nature quelconque, par exemple de données de réglage du mobile, ou encore échanger des programmes. On peut prévoir l'échange de plusieurs types de données distincts, par un codage adéquat de la nature du message dans le message déposé dans la boîte aux lettres. Dans cette optique , l'invention permet la gestion par la carte SIM de données typées, par exemple type structure ou union, qui sont définissables par l'application qui régit la carte et le mobile. On peut gérer de telles données sans modifier l'interface entre la carte et le mobile.

A l'inverse de l'art antérieur, l'invention permet de développer des applications propriétaires, sans pour autant devoir implémenter des commandes spécifiques nouvelles dans l'interface entre le mobile et le module d'identité de l'abonné. L'invention peut simplement être mise en oeuvre par une programmation appropriée du mobile et de la carte SIM. Il est clair que ces fonctionnalités ne font aucun obstacle à l'utilisation dans un mobile mettant en oeuvre l'invention d'une carte de l'art antérieur, ou inversement qu'une carte mettant en oeuvre l'invention peut être utilisée dans un mobile qui ne met pas en oeuvre l'invention.

La mise en oeuvre de l'invention est à la portée de l'homme du métier, par application des techniques connues de fabrication de terminaux et de cartes à circuits intégrés, sans qu'il soit nécessaire de décrire plus en détail la structure physique du terminal ou de la carte.

Bien entendu, la présente invention n'est pas limitée aux exemples et modes de réalisation décrits et représentés, mais elle est susceptible de nombreuses variantes accessibles à l'homme de l'art. On pourrait ainsi utiliser plus de deux boîtes aux lettres, en fonction de la nature des données à transmettre, ou en fonction de l'application envisagée.

## Revendications

1. Un terminal de télécommunication comprenant des moyens de réception d'un module d'identité d'abonné, des moyens de lecture ou d'écriture dans ledit module, des moyens d'identification d'une boîte aux lettres dans le module d'identité d'abonné, et des moyens pour déclencher la lecture répétée de la boîte aux lettres, caractérisé en ce que lesdits moyens d'identification comprennent des moyens de reconnaissance d'un identifiant de boîte aux lettres à la lecture de l'arborescence dudit module lors de l'initialisation du terminal.

2. Terminal selon la revendication 1 , caractérisé en ce que les moyens pour déclencher la lecture de la boite aux lettres déclenchent la lecture de la boîte aux lettres à intervalles réguliers.

3. Terminal selon la revendication 1 ou 2, caractérisé en ce que les moyens d'identification identifient une boîte aux lettres unique, et en ce que le terminal comprend des moyens pour déterminer à partir du contenu de la boîte aux lettres l'origine de ce contenu.

4. Terminal selon la revendication 1 ou 2, caractérisé en ce que les moyens d'identification identifient une boîte aux lettres dédiée à la communication du terminal vers le module et une boîte à lettres dédiée à la communication du module vers le terminal.

5. Terminal selon la revendication 4, caractérisé en ce qu'il comprend des moyens pour garder en mémoire le contenu lu ou écrit dans la boîte aux lettres et des moyens de comparaison du contenu lu dans la boîte avec le contenu des moyens de stockage.

6. Module d'identité d'abonné pour un terminal de télécommunications, comprenant des moyens d'allocation d'une boîte aux lettres, caractérisé en ce que la boîte aux lettres comprend un fichier dédié à la communication du terminal vers le module et un fichier dédié à la communication du module vers le terminal.

7. Un procédé de communication entre un terminal de télécommunications présentant des moyens de réception d'un module d'identité d'abonné et des moyens de lecture ou d'écriture dans ledit module, et un module d'identité d'abonné reçu dans lesdits moyens de réception, comprenant les étapes suivantes :
- allocation d'une boîte aux lettres dans le module d'identité de l'abonné;
- vérification par le terminal de la mise à jour de la boîte par le module, caractérisé en ce que l'étape d'allocation comprend les étapes:
- d'allocation par le module d'un identifiant de boîte aux lettres à un ou plusieurs fichiers, et
- de reconnaissance dudit identifiant par le terminal à la lecture de l'arborescence dudit module lors de l'initialisation du terminal.

8. Procédé selon la revendication 7, caractérisé par la répétition, de préférence à intervalles réguliers, de l'étape de vérification.

9. Procédé selon la revendication 7 ou 8, caractérisé en ce que l'étape de vérification comprend la lecture par le terminal de la boîte à lettres.

10. Procédé selon l'une des revendications 7 à 9, caractérisé en ce que la communication du terminal vers le module comprend l'écriture par le terminal dans la boîte aux lettres, et la lecture de la boîte aux lettres par le module.

11. Procédé selon l'une des revendications 7 à 10, caractérisé en ce que la communication du module vers le terminal module comprend l'écriture par le module dans la boîte aux lettres, et la lecture de la boîte aux lettres par le terminal.

12. Procédé selon l'une des revendications 7 à 11, caractérisé en ce que la boîte aux lettres comprend un fichier servant pour la communication du terminal vers le module et pour la communication du module vers le terminal.

13. Procédé selon l'une des revendications 7 à 12, caractérisé en ce que en ce que la boîte aux lettres comprend un fichier dédié à la communication du terminal vers le module et un fichier dédié à la communication du module vers le terminal.
